# EUROPEAN PATENT SPECIFICATION

(11) **EP 3 243 375 B1**
(45) Date of publication and mention of the grant of the patent: **11.12.2019**
(21) Application number: 16169700.8
(22) Date of filing: 13.05.2016
(51) Int. Cl.: A01F 15/08

(54) **METHOD OF OPERATING AN AGRICULTURAL SYSTEM FOR FORMING AND / OR WRAPPING A BALE OF CROP AND AGRICULTURAL SYSTEM**
VERFAHREN ZUM BETREIBEN EINES LANDWIRTSCHAFTLICHEN SYSTEMS ZUM FORMEN UND/ODER EINHÜLLEN EINES BALLENS AUS ERNTEGUT UND LANDWIRTSCHAFTLICHES SYSTEM
PROCÉDÉ DE FONCTIONNEMENT D'UN SYSTÈME AGRICOLE POUR FORMER ET/OU ENVELOPPER UNE BALLE DE PRODUIT RÉCOLTÉ ET SYSTÈME AGRICOLE

(43) Date of publication of application: 15.11.2017
(73) Proprietor: Kverneland Group Mechatronics BV, 2153 LR Nieuw-Vennep (NL)
(72) Inventor: Jacobs, Jeroen, 2402 EL Alphen aan den Rijn (NL); Van der Vlugt, Peter, 2135 HR Hoofddorp (NL)
(74) Representative: Bittner, Thomas L.

(56) References cited:
- WO-A1-2014/031355
- US-A1- 2009 107 102
- US-A1- 2013 112 094

## Description

The present disclosure refers to a method of operating an agricultural system for forming and / or wrapping a bale of crop and an agricultural system.

### Background

Such agricultural systems are used for preparing a bale made from crop. The system may be provided with a stand-alone baler or a combined baler and wrapper, the combined baler and wrapper being capable of forming the bale from crop picked up from the field and wrapping the bale formed by the wrapper. Also, there are systems available which prepare a bale by picking up a bale formed before from the field and wrap the bale formed before with a wrapping material. Such system may also be referred to as stand-alone baler. Finally, the prepared bale being wrapped or unwrapped is dropped or released in the field which the system is moving over the field.

Methods and systems have been proposed for optimizing bale drop locations within the field. Document US 2015 / 0216125 A1 discloses a baler for forming a crop bale and releasing or dropping the bale at target drop locations in field. The baler includes a bale forming chamber, a bale carrier reward of the forming chamber, a geographic location sensor and a control system. The bales formed by the baler are dropped in dependence on geographic or GPS coordinates (GPS - Global Positioning System).

Document EP 1 604 565 A1 discloses a system configured to drop a bale depending on GPS position. A laser sensing system may be provided for detecting the course of the swath from which the crop for the bale formed is picked up.

Document US 2009/0107102 A1 discloses a tractor comprising an electronic tractor controller. A baler is provided with crop receiving means, a bailing chamber, a rear door, a rear door actuator, a bale size sensor associated with the bailing chamber, and an electronic baler controller. The baler controller is operable to submit a halt signal to the tractor controller when a bale size signal provided by the bale size sensor indicates that a bale has reached a size corresponding o a predetermined size. The rear door is opened automatically after the bale has been wrapped, but only if an obstacle sensor detects no obstacle in a detection zone behind the baler. The obstacle sensor may comprise a camera and an image processing system

Document WO 2014/031355 A1 discloses a baler for forming crop bales and releasing or dropping the bales at targeted drop locations in a field. The baler is provided with a geographic location sensor and a control system. The geographic location sensor outputs signals corresponding with a geographic location of the baler. The control system has a plurality of targeted bale drop locations stored therein, and it is configured to calculate a distance from the current baler position to a first targeted drop position and calculate a distance from the baler position to a second targeted position and compare the distance to determine a desired drop location to generate a signal to command the baler carrier to release the crop bale therefrom.

### Summary

It is an object of the present disclosure to provide a method of operating an agricultural system for forming and / or wrapping a bale of crop and an agricultural system which allow for an optimized bale dropping or releasing in the field.

For solving the object a method of operating an agricultural system according to claim 1 is provided. Further, an agricultural according to claim 9 is provided. Alternative embodiments are subject of dependent claims.

According to an aspect, a method of operating an agricultural system for forming and / or wrapping a bale of crop is provided. The method comprises moving an agricultural apparatus over a field, the agricultural apparatus configured for at least one of forming and wrapping a bale of crop. By the agricultural apparatus a bale of crop (crop bale) is prepared. In a vicinity of the agricultural apparatus surroundings are observed by an observation system while the agricultural apparatus is moving over the field. Observation data are generated by the observation system, the observation data indicating a first bale dropped before in the field being located in the vicinity of the agricultural apparatus. The observation data are processed by a data processing unit. The first bale dropped before is determined by the data processing unit. In response to the determining, the bale is dropped or released by the agricultural apparatus in the field.

According to another aspect, an agricultural system for forming and / or wrapping a bale of crop is provided, the agricultural system comprising a tractor, a agricultural apparatus functionally connected to the tractor, an observation system, and a data processing device. The observation system is configured for observing surroundings in a vicinity of the agricultural apparatus while the agricultural apparatus is moving over a field. The agricultural system is configured to move the agricultural apparatus over a field; prepare, by the agricultural apparatus, a bale made from crop for dropping the bale in the field; observe surroundings in the vicinity of the agricultural apparatus by the observation system while the agricultural apparatus is moving over the field; generate, by the observation system, observation data indicating a first bale dropped before to the field being located in the vicinity of the agricultural apparatus; process the observation data by a data processing unit; determine, by the data processing unit, the first bale dropped before; and drop the bale in response to the determining from the agricultural apparatus in the field.

The dropping further comprises receiving bale drop control data, and dropping the bale in response to the bale drop control data. The bale drop control data defines one or more condi-tions or parameters with regard to actual bale dropping, e.g. a targeted drop location. In addition to determining the bale dropped before from the data provided by the observation system, further parameter(s) are considered prior to actually dropping the bale. Such parameters refer to at least one of a time delay with regard to determining the first bale dropped before from the observation data and a distance definition in relation to the location where the first bale dropped before is determined from the observation data. Geographic coordinates such as GPS data may be considered.

The observation system and the data processing unit may be connected to a data bus provided in the baling system. The data processing unit may be implemented as part of the observation system. Electronic data may be transmitted through the data bus between the components of the agricultural system. The process of dropping or releasing the bale in a target position or location in the field may be controlled by a controller of the baling system. In an embodiment, the controller may be provided as an implement controller.

The system may be provided with self-driving agricultural apparatus. In an alternative embodiment, the agricultural apparatus is connected to a tractor, thereby, providing a tractor implement combination.

The determining of the first bale dropped before in the processing of the observation data by the data processing unit may comprise at least one of determining presence of the first bale in the vicinity of the agricultural apparatus and determining a location or position of the first bale in the field.

With regard to alternative embodiments, preparing the bale of crop may comprise at least one of forming a bale of crop by a baler and wrapping a bale formed before by a wrapper.

The bale finally drop in the field may be wrapped or unwrapped.

The method may comprise observing the vicinity of the agricultural apparatus by a camera observation system; generating, by the camera observation system, video observation data indicating the first bale dropped before to the field being located in the vicinity of the agricultural apparatus; and processing the observation data by a video data analysis in the data processing unit. The video data may comprise at least one of picture data and video film data. One or more cameras may be provided on the baling system. In an embodiment, one or more cameras may be located on the tractor provided for moving the agricultural apparatus over the field. Adjustment of the cameras for controlling an individual camera observation space may be controlled automatically by the controller provided in the system. As an alternative or in addition, an individual camera position or orientation may be adjusted by the user, for example, by providing user input through a joystick or touch sensitive display.

The dropping may further comprise receiving a user input, and dropping the bale in response to the user input. In response to determining the first bale dropped before being located in the vicinity of the agricultural apparatus, a request for user input may be outputted. The user input request may request the user for drop confirmation, thereby, confirming that the bale prepared by the baling system shall be dropped or released. Thereby, the user may be given control of actual bale dropping in a target position or location in the field.

The observation system may be carried by at least one of the apparatus and a tractor connected to the agricultural apparatus. The agricultural system carried by the tractor may be a combined baler and wrapper, the combined baler and wrapper being configured to from the bale from crop in one or more bale forming chambers and wrapping the bale formed by a wrapper. In an alternative embodiment, the agricultural apparatus may be a wrapper capable of picking up a bale formed from crop before and wrapping the bale with a wrapping material. Such wrapper is missing the bale forming device. In still a further alternative, the agricultural apparatus may be a stand-alone baler configured for bale forming only, but missing the wrapper device. Such bale formed and dropped in the field may be picked-up later by the wrapper (stand-alone wrapper).

The preparing may further comprise picking-up a bale of a crop from the field and wrapping the bale with a wrapping material by a wrapping device provided on the agricultural apparatus. The bale of a crop has been formed before by a bale forming apparatus provided with one or more bale forming chambers in which the bale is formed from crop. Following, the bale was dropped to the field.

In an alternative embodiment, the preparing may further comprise forming a bale of crop and wrapping the bale by the wrapping device on the agricultural apparatus. In this alternative embodiment a combined baler and wrapper may be used. The observation system may be provided on the combined baler and wrapper.

The method may further comprise generating, by the observation system, observation data indicating a second bale dropped before in the field being located in the vicinity of the agricultural apparatus; processing the observation data by the data processing unit; determining, by the data processing unit, the second bale dropped before; and dropping the bale in response to the determining both the first and the second bale from the agricultural apparatus in the field. In response to determining the first and the second bale an actual drop position for the bale prepared by the agricultural system may be determined in dependence on both the first and second bale. For example, the bale prepared may be dropped in a middle position between the location of the first bale and the location of the second bale has determined from the observation data. As an alternative, a drop or release location for the bale prepared by the agricultural system may be determined to be closer to one of the first and the second bale drop before.

The method may further comprise providing bale preparation data by a bale preparation sensor device, the bale preparation data indicating whether the bale is ready for dropping; preventing further moving of the agricultural apparatus, if the bale is not ready for dropping, in response to the determining the first bale dropped before; dropping the bale in the field in response to the bale preparation data indicating the bale being ready for dropping; and clearing for further moving of the agricultural apparatus. The bale preparation sensor device may gather signals with regard to the process of forming the bale from the crop prior to wrapping the bale. For example, the size of the bale formed may be detected. As an alternative or in addition, the bale preparation sensor device may gather signals indicative of the status of the wrapping process for wrapping the bale formed before. If the signals gathered by the bale preparation sensor device are indicating the bale to be prepared not yet ready for dropping or releasing, the agricultural apparatus is prevented from further moving. While the agricultural apparatus is stopped the bale may be finally prepared. Following, in response to the determining of the first bale dropped before from the observation data, the bale presently prepared may be dropped or released in the field. Thereby, a situation may be avoided in which the bale is to be dropped in response to the determining of the first bale dropped before from the processing of the observation data, but the bale being not yet finally prepared for drop.

The agricultural system may comprise a system controller having a tractor controller and a agricultural apparatus controller, the tractor controller and the agricultural apparatus controller connected to a data bus of the system controller. The agricultural apparatus controller may also be referred to as implement controller.

The agricultural apparatus may be provided as one of a bale forming apparatus, a bale wrapping apparatus, and a combined bale forming and bale wrapping apparatus.

The alternative embodiments described above by referring to the method of operating the baling system may apply to the agricultural system mutatis mutandis.

### Description of embodiments

Following, further embodiments are described in detail by referring to figures. In the figures, show:
- Fig 1: a schematic block diagram representation of an arrangement comprising an observation system in an agricultural system; and
- Fig. 2: a block diagram for a method of operating an agricultural system.

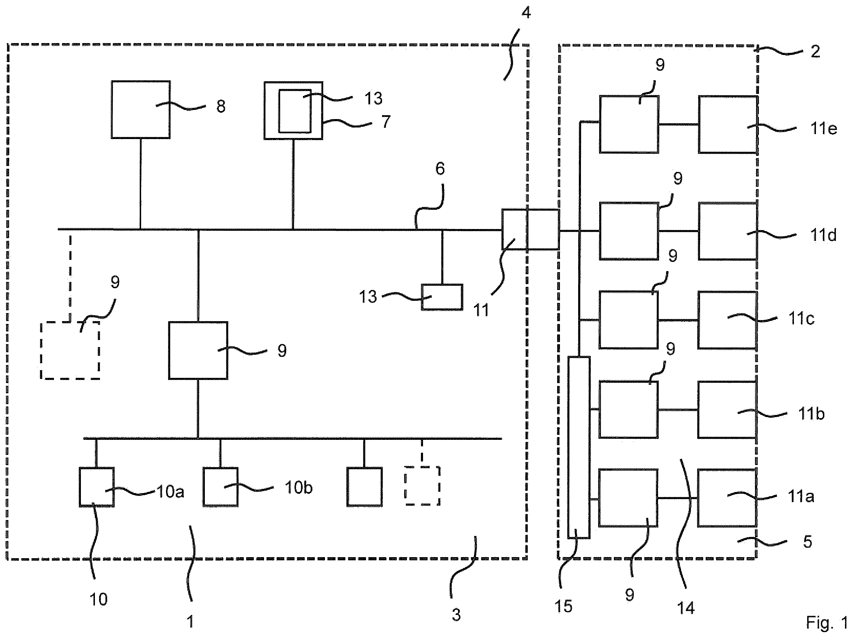

Fig. 1 shows a schematic representation of an agricultural system having a tractor 1 and an implement 2 provided as agricultural apparatus hitched to the tractor 1.

The agricultural apparatus may be configured to form a bale from crop and wrap the formed bale by the wrapping device on the agricultural apparatus. In such embodiment a combined baler and wrapper may be used. In an alternative embodiment, the agricultural apparatus may be configured to pick up a bale formed before from the field and wrap the bale with a wrapping material by a wrapping device provided on the agricultural apparatus. The bale has been formed by a bale forming apparatus separated from the baling apparatus and provided with at least one bale forming chamber in which the bale is formed from crop.

Fig. 1 refers to an agricultural system having the implement 2 comprising the agricultural apparatus hitched to the tractor 1. As an alternative, implement 2 may be a self-driving apparatus. In such embodiment the tractor may not be present.

An agricultural system control network 3 provides for an electronic control system of the agricultural system. The agricultural system control network 3 comprises a tractor control network 4 and an implement control network 5 which, in the embodiment shown, may also be referred to as agricultural system controller. The agricultural system control network 3 is having a data bus 6 to which a user terminal 7, a task controller 8, and a plurality of electronic control units 9 are connected. Each of the electronic control units 9 is assigned to at least one functional element from a plurality of functional elements 10, 11 provided in the tractor 1 and the implement 2, respectively.

In the tractor 1, the functional elements 10a, 10b may refer, for example, to at least one of a moving control, a speed control, and a steering control for controlling operation and movement of the tractor 1 while moving the tractor 1 with the implement 2 over a field. For example, control signals provided to one or more of the functional elements 10a, 10b may provide for speeding up movement of the tractor 1, preventing the tractor from further moving, and / or re-starting movement of the tractor 1 after a stop.

Through the data bus 6 electronic data or signals may be transmitted between the components, units, modules or elements connected to the data bus 6. The electronic control system of the agricultural system control network 3 may implement the ISO 11783 standard, preferably the ISO 11783-11 standard.

The data bus 6 is provided with a plug connector 12 connecting the tractor control network 4 and the implement control network 5. In addition or as an alternative, electronic data may be transmitted by wireless data transmission. The data bus 6 may comprise a wireless data communication channel.

The user or operator terminal 7 is provided with a terminal display 13 and provides for user control and user display. Further, the user terminal 7 is provided with a processor unit comprising a processor and a memory element connected to the processor. Multiple software applications implemented on the user terminal 7 may be running simultaneously.

Through the user terminal 7 user input may be received for controlling the functional elements 10a, 10b of the agricultural machine or system. Also, through the terminal display 13 operation information may be displayed to the user.

An observation system 14 is provided with functional elements 11a, 11b which each, for example, may comprise a camera. The observation system 14 is provided for monitoring the vicinity of the implement 2 and the tractor 1 while the tractor-implement combination is moving over the field. Such monitoring may be performed continuously. For example, the surroundings in the vicinity of the implement 2 are watched by a plurality of cameras provided by different elements 11a, 11b. Observation data are generated by the functional elements 11a, 11b of observation system 14. The observation data are processed in a data processing unit 15 functionality connected to the functional elements 11a, 11b through the electronic control units 9. In an alternative embodiment, the functional elements 11a, 11b be connected directly to the data processing unit 15. The data processing unit 15 may be provided with one or more processors.

Further, the data processing unit 15 is connected to the functional element 11c configured to release a bale prepared by the agricultural apparatus of the implement 2 in the field.

Other functional elements 11d, 11e provide for other functions of the implement such as a bale preparation sensor, and a wrapper configured to wrap a bale formed from crop. The bale preparation sensor may be configured to sense signals indicative of a status of preparation of the bale in the process of preparing the bale from crop picked up from the field.

Specifically, the observation data are processed to determine whether a bale prepared and dropped by the implement 2 before in the field is located in the vicinity of the implement 2 provided with the agricultural apparatus while moving over the field. For example, for observation data processing video observation data are processed by a digital video data analysis. If such bale is determined by the data processing, the data processing unit 15 may dispatch a bale release signal to at least of the functional elements 11d, 1 le for dropping the bale prepared, thereby, releasing the bale in targeted location in the field.

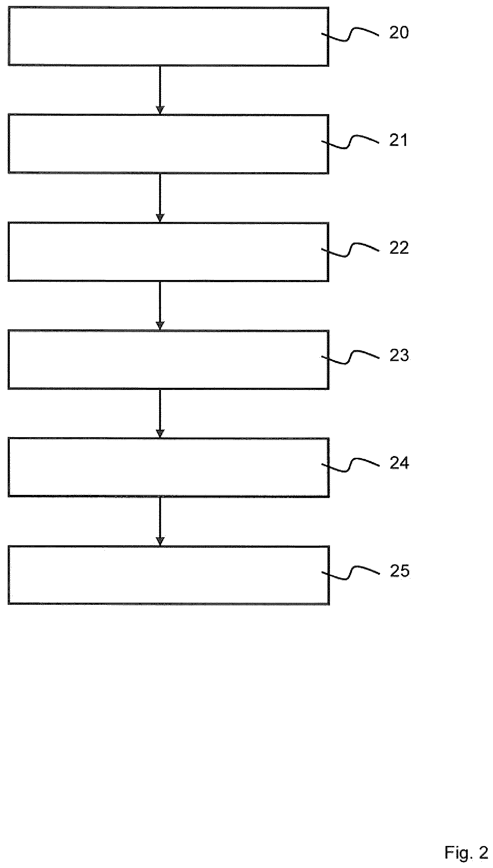

Fig. 2 shows a schematic representation of a block diagram with regard to a method of operating an agricultural system.

In step 20 the implement 2 comprising the agricultural apparatus is moving over the field. While moving over the field the agricultural apparatus is preparing a bale. Such preparation process performed by the agricultural apparatus may comprise forming the bale from crop and wrapping the bale formed by a wrapping material. In an alternative embodiment, a bale prepared by a separated baler before and dropped may be picked up by the agricultural apparatus of the implement 2 for wrapping. Following, in the preparation process, the pre-formed bale picked up is wrapped.

In step 21, surroundings in the vicinity of the implement 2 and the tractor 1 are observed by the observation system 14 while the implement 2 with the agricultural apparatus is moving over the field. The observation system 14 is provided on the implement 2. In an alternative embodiment, elements or units such as cameras of the observation system may be provided the tractor 1. It may also be foreseen to have the observation system 14 including the data processing unit 15 and the functional elements 11a, 11b provided on the tractor14, the data processing unit 15 at least being connected to the functional unit 11c configured to release the bale from the implement 2.

The observation system 14 is generating observation data in step 22. For example, video data may be generated by one or more digital cameras of the observation system 14. The observation data are indicative of a first bale which was dropped or released before in the field. For example, the video data gathered by the observation system 14 show the first bale being located in the vicinity of the agricultural apparatus while the agricultural apparatus is moving over the field.

In step 23 the observation data are processed by the data processing unit 15 which may be provided in the implement control network 5. In case the observation data are provided with video data, the data processing may comprise a digital video data analysis.

If the first bale dropped before is determined in the data processing, in a step 24, the bale prepared by the agricultural apparatus of the implement 2 is dropped or released from the agricultural apparatus in the field in step 25.

The releasing or dropping of the bale may take place in response to one or more further drop parameter. For example, in relation to the location or position determined for the first bale dropped before from the observation data, a time delay and / or a distance may be defined by the further or additional drop parameter to further specify the drop or release location of the bale prepared by the agricultural apparatus.

The features disclosed in this specification, the figures and / or the claims may be material for the realization of various embodiments, the scope of the invention being defined by the appended claims.

## Claims

1. A method of operating an agricultural system for forming and / or wrapping a bale of crop, the method comprising
- moving an agricultural apparatus over a field, the agricultural apparatus configured for at least one of forming and wrapping a bale of crop;
- preparing, by the agricultural apparatus, a bale of crop;
- observing surroundings in a vicinity of the agricultural apparatus by an observation system (14) while the agricultural apparatus is moving over the field;
- generating, by the observation system (14), observation data indicating whether a first bale dropped before to the field is located in the vicinity of the agricultural apparatus;
- processing the observation data by a data processing unit (15);
- determining, by the data processing unit (15), if the first bale dropped before is present in the vicinity; and
- dropping the bale from the baling apparatus to the field in response to said determining, the dropping further comprising receiving bale drop control data defining one or more conditions for actual bale dropping, and dropping the bale in response to the bale drop control data, wherein the one or more conditions comprise at least one of the following conditions: a time delay with regard to determining the first bale dropped before from the observation data, and a distance definition in relation to the location where the first bale dropped before determined from the observation data.

2. Method according to claim 1, further comprising
- observing the vicinity of the agricultural apparatus by a camera observation system;
- generating, by the camera observation system, video observation data indicating the first bale dropped before to the field being located in the vicinity of the agricultural apparatus; and
- processing the observation data by a video data analysis in the data processing unit (15).

3. Method according to claim 1 or 2, the dropping further comprising receiving a user input, and dropping the bale in response to the user input.

4. Method according to any of the preceding claims, the observation system (14) being carried by at least one of the agricultural apparatus and a tractor connected to the agricultural apparatus.

5. Method according to any of the preceding claims, the preparing further comprising picking-up a bale of crop from the field and wrapping the bale with a wrapping material by a wrapping device provided on the agricultural apparatus.

6. Method according to any of the preceding claims, the preparing further comprising forming a bale of crop and wrapping the bale by the wrapping device on the baling apparatus.

7. Method according to any of the preceding claims, further comprising
- generating, by the observation system (14), observation data indicating a second bale dropped before in the field being located in the vicinity of the agricultural apparatus;
- processing the observation data by the data processing unit (15);
- determining, by the data processing unit (15), the second bale dropped before; and
- dropping the bale in response to the determining both the first and the second bale from the agricultural apparatus in the field.

8. Method according to any of the preceding claims, further comprising
- providing bale preparation data by a bale preparation sensor device, the bale preparation data indicating whether the bale is ready for dropping;
- preventing further moving of the agricultural apparatus, if the bale is not ready for dropping, in response to the determining the first bale dropped before;
- dropping the bale to the field in response to the bale preparation data indicating the bale ready being for dropping; and
- clearing for further moving of the agricultural apparatus.

9. An agricultural system for forming and / or wrapping a bale of crop, comprising
- a tractor (1);
- an agricultural apparatus functionally connected to the tractor (1);
- an observation system (14), configured for observing surroundings in a vicinity of the agricultural apparatus while the agricultural apparatus is moving over a field; and
- a data processing unit (15);
wherein the agricultural system is configured to
- move the agricultural apparatus over a field;
- prepare, by the baling apparatus, a bale made from crop for dropping the bale on the field;
- observe surroundings in the vicinity of the agricultural apparatus by the observation system (14) while the agricultural apparatus is moving over the field;
- generate, by the observation system (14), observation data indicating if a first bale dropped before to the field is located in the vicinity of the agricultural apparatus;
- process the observation data by the data processing unit (15);
- determine, by the data processing unit (15), if the first bale dropped before is present in the vicinity; and
- drop the bale from the agricultural apparatus to the field in response to said determining;
wherein the agricultural system is further configured to the receive bale drop control data defining one or more conditions for actual bale dropping, and drop the bale in response to the bale drop control data, wherein the one or more conditions comprise at least one of the following conditions: a time delay with regard to determining the first bale dropped before from the observation data, and a distance definition in relation to the location where the first bale dropped before determined from the observation data.

10. The agricultural system according to claim 9, comprising a system controller having a tractor controller and an agricultural apparatus controller, the tractor controller and the agricultural apparatus controller connected to a data bus of the system controller.

11. The agricultural system according to claim 9 or 10, wherein the agricultural apparatus is provided as one of a bale forming apparatus, a bale wrapping apparatus, and a combined bale forming and bale wrapping apparatus.

## Patentansprüche

1. Verfahren zum Betreiben eines landwirtschaftlichen Systems zum Ausbilden und/oder Wickeln eines Erntegutballens, wobei das Verfahren umfasst
- Bewegen einer landwirtschaftlichen Einrichtung über ein Feld, wobei die landwirtschaftliche Einrichtung zum Ausbilden und/oder Wickeln eines Erntegutballens eingerichtet ist;
- Vorbereiten eines Erntegutballens durch die landwirtschaftliche Einrichtung;
- Beobachten einer Umgebung in einem Umkreis der landwirtschaftlichen Einrichtung durch ein Beobachtungssystem (14) während sich die landwirtschaftliche Einrichtung über das Feld bewegt;
- Erzeugen von Beobachtungsdaten durch das Beobachtungssystem (14), die anzeigen, ob sich ein erster, zuvor auf das Feld abgeworfener Ballen in dem Umkreis der landwirtschaftlichen Einrichtung befindet;
- Verarbeiten der Beobachtungsdaten durch eine Datenverarbeitungseinheit (15);
- Bestimmen durch die Datenverarbeitungseinheit (15), ob der erste, zuvor abgeworfene Ballen in dem Umkreis vorhanden ist;
und
- Abwerfen des Ballens aus der Ballenpresseinrichtung auf das Feld als Reaktion auf das Bestimmen, wobei das Abwerfen ferner ein Empfangen von Ballenabwurfsteuerdaten, die eine oder mehrere Bedingungen zum tatsächlichen Ballenabwerfen definieren, umfasst, und Abwerfen des Ballens als Reaktion auf die Ballenabwurfsteuerdaten, wobei die eine oder die mehreren Bedingungen wenigstens eine der folgenden Bedingungen umfassen: eine Zeitverzögerung bezüglich des Bestimmens des zuvor abgeworfenen Ballens aus den Beobachtungsdaten und/oder eine Abstandsdefinition in Bezug auf den Ort, an dem der erste, zuvor abgeworfene Ballen aus den Beobachtungsdaten bestimmt wurde.

2. Verfahren nach Anspruch 1, ferner umfassend
- Beobachten des Umkreises der landwirtschaftlichen Einrichtung durch ein Kamerabeobachtungssystem;
- Erzeugen von Videobeobachtungsdaten durch das Kamerabeobachtungssystem, die anzeigen, dass sich der zuvor auf das Feld abgeworfene Ballen in dem Umkreis der landwirtschaftlichen Einrichtung befindet;
und
- Verarbeiten der Beobachtungsdaten durch eine Videodatenanalyse in der Datenverarbeitungseinheit (15).

3. Verfahren nach Anspruch 1 oder 2, wobei das Abwerfen ferner ein Empfangen einer Benutzereingabe und ein Abwerfen des Ballens als Reaktion auf die Benutzereingabe umfasst.

4. Verfahren nach einem der vorhergehenden Ansprüche, wobei das Beobachtungssystem (14) durch die landwirtschaftliche Einrichtung und/oder einen mit der landwirtschaftlichen Einrichtung verbundenen Traktor getragen wird.

5. Verfahren nach einem der vorhergehenden Ansprüche, wobei das Vorbereiten ferner ein Aufnehmen eines Erntegutballens von dem Feld und ein Wickeln des Ballens mit einem Wickelmaterial durch eine auf der landwirtschaftlichen Einrichtung bereitgestellte Wickelvorrichtung umfasst.

6. Verfahren nach einem der vorhergehenden Ansprüche, wobei das Vorbereiten ferner das Ausbilden eines Erntegutballens und das Wickeln des Ballens durch die Wickelvorrichtung auf der Ballenpresseinrichtung umfasst.

7. Verfahren nach einem der vorhergehenden Ansprüche, ferner umfassend
- Erzeugen von Beobachtungsdaten durch das Beobachtungssystem (14), die anzeigen, dass sich ein zweiter, zuvor auf dem Feld abgeworfener Ballen in dem Umkreis der landwirtschaftlichen Einrichtung befindet;
- Verarbeiten der Beobachtungsdaten durch die Datenverarbeitungseinheit (15);
- Bestimmen, durch die Datenverarbeitungseinheit (15), des zweiten, zuvor abgeworfenen Ballens; und
- Abwerfen des Ballens als Reaktion auf das Bestimmen sowohl des ersten als auch des zweiten Ballens aus der landwirtschaftlichen Einrichtung auf das Feld.

8. Verfahren nach einem der vorhergehenden Ansprüche, ferner umfassend
- Bereitstellen von Ballenvorbereitungsdaten durch eine Ballenvorbereitungssensorvorrichtung, wobei die Ballenvorbereitungsdaten anzeigen, ob der Ballen bereit ist, abgeworfen zu werden;
- Verhindern eines weiteren Bewegens der landwirtschaftlichen Einrichtung, falls der Ballen nicht bereit ist, abgeworfen zu werden, als Reaktion auf das Bestimmen des ersten, zuvor abgeworfenen Ballens;
- Abwerfen des Ballens auf das Feld als Reaktion auf die Ballenvorbereitungsdaten, die anzeigen, dass der Ballen bereit ist, abgeworfen zu werden; und
- Freigeben zum weiteren Bewegen der landwirtschaftlichen Einrichtung.

9. Landwirtschaftliches System zum Ausbilden und/oder Wickeln eines Erntegutballens, Folgendes umfassend
- einen Traktor (1);
- eine landwirtschaftliche Einrichtung, die funktionell mit dem Traktor (1) verbunden ist;
- ein Beobachtungssystem (14), das zum Beobachten der Umgebung in einem Umkreis der landwirtschaftlichen Einrichtung, während sich die landwirtschaftliche Einrichtung über das Feld bewegt, eingerichtet ist; und
- eine Datenverarbeitungseinheit (15);
wobei das landwirtschaftliche System eingerichtet ist zum
- Bewegen der landwirtschaftlichen Einrichtung über ein Feld;
- Vorbereiten eines aus Erntegut hergestellten Ballens durch die Ballenpresseinrichtung zum Abwerfen des Ballens auf das Feld;
- Beobachten der Umgebung in dem Umkreis der landwirtschaftlichen Einrichtung durch das Beobachtungssystem (14) während sich die landwirtschaftliche Einrichtung über das Feld bewegt;
- Erzeugen von Beobachtungsdaten durch das Beobachtungssystem (14), die anzeigen, ob sich ein erster, zuvor auf das Feld abgeworfener Ballen in dem Umkreis der landwirtschaftlichen Einrichtung befindet;
- Verarbeiten der Beobachtungsdaten durch die Datenverarbeitungseinheit (15);
- Bestimmen, durch die Datenverarbeitungseinheit (15), ob der erste, zuvor abgeworfene Ballen in dem Umkreis vorhanden ist;
und
- Abwerfen des Ballens aus der landwirtschaftlichen Einrichtung auf das Feld als Reaktion auf das Bestimmen; wobei das landwirtschaftliche System ferner eingerichtet ist, die Ballenabwurfsteuerdaten, die eine oder mehrere Bedingungen zum tatsächlichen Ballenabwerfen definieren, zu empfangen und den Ballen als Reaktion auf die Ballenabwurfsteuerdaten abzuwerfen, wobei die eine oder die mehreren Bedingungen wenigstens eine der folgenden Bedingungen umfassen: eine Zeitverzögerung bezüglich des Bestimmens des ersten zuvor abgeworfenen Ballens aus den Beobachtungsdaten und/oder eine Abstandsdefinition in Bezug auf den Ort, an dem der erste zuvor abgeworfene Ballen aus den Beobachtungsdaten bestimmt wurde.

10. Landwirtschaftliches System nach Anspruch 9, umfassend eine Systemsteuerung, die eine Traktorsteuerung und eine landwirtschaftliche Einrichtungssteuerung aufweist, wobei die Traktorsteuerung und die landwirtschaftliche Einrichtungssteuerung mit einem Datenbus der Systemsteuerung verbunden sind.

11. Landwirtschaftliches System nach Anspruch 9 oder 10, wobei die landwirtschaftliche Einrichtung als eine Ballenausbildungseinrichtung, eine Ballenwickeleinrichtung oder eine kombinierte Ballenausbildungs- und Ballenwickeleinrichtung bereitgestellt ist.

## Revendications

1. Procédé de fonctionnement d'un système agricole pour former et/ou envelopper une balle de récolte, le procédé comprenant
- le déplacement d'un appareil agricole sur un champ, l'appareil agricole étant conçu pour former et/ou envelopper une balle de récolte ;
- la préparation, grâce à l'appareil agricole, d'une balle de récolte ;
- l'observation de l'environnement dans le voisinage de l'appareil agricole par un système d'observation (14) pendant que l'appareil agricole se déplace sur le champ ;
- la génération, grâce au système d'observation (14), des données d'observation indiquant si une première balle précédemment expulsée sur le champ est placée dans le voisinage de l'appareil agricole ;
- le traitement des données d'observation par une unité de traitement des données (15)
- la détermination, grâce à l'unité de traitement de données (15), du fait de savoir si la première balle précédemment expulsée est présente dans le voisinage ;
et
- l'expulsion de la balle à partir de l'appareil de mise en balles sur le champ en réponse à ladite détermination, l'expulsion comprenant en outre la réception de données de commande d'expulsion de balle définissant au moins une condition pour l'expulsion réel de balle, et l'expulsion de la balle en réponse aux données de commande d'expulsion de balle, l'au moins une condition comprenant au moins une des conditions suivantes : un délai temporel concernant la détermination de la première balle précédemment expulsée à partir des données d'observation, et une définition de distance par rapport à l'emplacement où la première balle a été précédemment expulsée déterminée à partir des données d'observation.

2. Procédé selon la revendication 1, comprenant en outre
- l'observation du voisinage de l'appareil agricole grâce à un système d'observation par caméra ;
- la génération, par le système d'observation par caméra, des données d'observation vidéo indiquant la première balle précédemment expulsée sur le champ placée dans le voisinage de l'appareil agricole ;
et
- le traitement des données d'observation par une analyse vidéo des données dans l'unité de traitement des données (15).

3. Procédé selon la revendication 1 ou 2, l'expulsion comprenant en outre la réception d'une entrée utilisateur, et l'expulsion de la balle en réponse à l'entrée utilisateur

4. Procédé selon l'une quelconque des revendications précédentes, le système d'observation (14) étant porté par au moins l'un parmi l'appareil agricole et un tracteur relié à l'appareil agricole.

5. Procédé selon l'une quelconque des revendications précédentes, la préparation comprenant en outre le ramassage d'une balle de récolte dans le champ et l'enveloppement de la balle avec un matériau d'enveloppement grâce à un dispositif d'enveloppement prévu sur l'appareil agricole.

6. Procédé selon l'une quelconque des revendications précédentes, la préparation comprenant en outre la formation d'une balle de récolte et l'enveloppement de la balle grâce au dispositif d'enveloppement sur l'appareil de mise en balles.

7. Procédé selon l'une quelconque des revendications précédentes, comprenant en outre
- la génération, grâce au système d'observation (14), des données d'observation indiquant une seconde balle précédemment expulsée dans le champ placée dans le voisinage de l'appareil agricole ;
- le traitement des données d'observation par l'unité de traitement des données (15) ;
- la détermination, grâce à l'unité de traitement des données (15), de la seconde balle précédemment expulsée ; et
- l'expulsion de la balle en réponse à la détermination de la première et de la seconde balle à partir de l'appareil agricole dans le champ.

8. Procédé selon l'une quelconque des revendications précédentes, comprenant en outre
- la prévision des données de préparation de balle grâce à un dispositif de capteur de préparation de balle, les données de préparation de balle indiquant si la balle est prête à être expulsée ;
- l'empêchement de tout déplacement ultérieur de l'appareil agricole, si la balle n'est pas prête à être expulsée, en réponse à la détermination de la première balle précédemment expulsée ;
- l'expulsion de la balle sur le champ en réponse aux données de préparation de la balle indiquant que la balle est prête à être expulsée ; et
- l'autorisation d'un déplacement ultérieur de l'appareil agricole.

9. Système agricole pour former et/ou envelopper une balle de récolte, comprenant
- un tracteur (1) ;
- un appareil agricole fonctionnellement relié au tracteur (1) ;
- un système d'observation (14), configuré pour observer l'environnement dans le voisinage de l'appareil agricole lorsque l'appareil agricole se déplace sur un champ ; et
- une unité de traitement des données (15) ;
dans lequel le système agricole est configuré pour
- déplacer l'appareil agricole sur un champ ;
- préparer, grâce à l'appareil de mise en balles, une balle faite à partir de récolte pour l'expulser sur le champ ;
- observer l'environnement dans le voisinage de l'appareil agricole grâce au système d'observation (14) pendant que l'appareil agricole se déplace sur le champ ;
- générer, grâce au système d'observation (14), des données d'observation indiquant si une première balle précédemment expulsée sur le champ est placée dans le voisinage de l'appareil agricole ;
- traiter les données d'observation par l'unité de traitement des données (15) ;
- déterminer, grâce à l'unité de traitement des données (15), si la première balle précédemment expulsée est présente dans le voisinage ;
et
- expulser la balle à partir de l'appareil agricole sur le champ en réponse à ladite détermination ; le système agricole étant en outre configuré pour recevoir les données de commande d'expulsion de balle définissant au moins une condition pour l'expulsion de balle réelle, et expulser la balle en réponse aux données de commande d'expulsion de balle, l'au moins une condition comprenant au moins une des conditions suivantes : un délai temporel concernant la détermination de la première balle précédemment expulsée à partir des données d'observation, et une définition de distance par rapport à l'emplacement où la première balle a été précédemment expulsée déterminée à partir des données d'observation.

10. Système agricole selon la revendication 9, comprenant un dispositif de commande de système ayant un dispositif de commande de tracteur et un dispositif de commande d'appareil agricole, le dispositif de commande de tracteur et le dispositif de commande d'appareil agricole étant connectés à un bus de données du dispositif de commande de système.

11. Système agricole selon la revendication 9 ou 10, dans lequel l'appareil agricole est prévu sous la forme d'un appareil de formation de balles, d'un appareil d'enveloppement de balles et d'un appareil combiné de formation et d'enveloppement de balles.
